# EUROPEAN PATENT APPLICATION

(11) **EP 2 395 733 A2**
(43) Date of publication of application: **14.12.2011**
(21) Application number: 11002937.8
(22) Date of filing: 07.04.2011
(51) Int. Cl.: H04M 1/22

(54) **Mobile terminal**

(30) Priority: 14.06.2010 KR 20100055845
(71) Applicant: LG ELECTRONICS INC., Yeongdeungpo-gu Seoul 150-721 (KR)
(72) Inventor: Seen, Seungmin, Kumcheon-gu Seoul 153-801 (KR)
(74) Representative: Katérle, Axel

(57) **Abstract**

A mobile terminal comprises a display panel, a plurality of light sources spaced from one another; a light guide to receive light from the light sources; and a quantum dot filter between the light sources and the light guide.

## Description

### CROSS-REFERENCE TO RELATED APPLICATIONS

This application claims the benefit of earlier filing date and right of priority to Korean Application No.10-2010-0055845, filed on June 14, 2010, the contents of which are incorporated herein by reference.

### BACKGROUND

### 1. Field

One or more embodiments described herein relate to a mobile terminal.

### 2. Background

Generally, terminals can be classified as mobile terminals and stationary terminals according to the ease of their mobility. And, mobile terminals can be classified into handheld terminals and vehicle mount terminals according to their ability to be hand-carried.

As the functions of mobile terminals become more diversified, they are expected to be implemented as multimedia player terminals equipped with composite functions including picture or video photographing, music or video file playback, games, broadcast reception and the like for example. In order to support these and other functions, a modification of the structural and/or software portions of the terminal may be taken into consideration.

### BRIEF DESCRIPTION OF THE DRAWINGS

FIG. 1 shows one embodiment of a mobile terminal.

FIG. 2A shows a front view and FIG. 2B a back view of the terminal.

FIG. 3 shows one embodiment of a display unit of the mobile terminal.

FIG. 4 shows one embodiment of a backlight unit of the mobile terminal.

FIG. 5 shows another view of the backlight unit of the mobile terminal.

FIG. 6 shows a first embodiment of a light emission module.

FIG. 7 shows a second embodiment of a light emission module.

FIG. 8 shows a third embodiment of a light emission module.

FIG. 9 shows a fourth embodiment of a light emission module.

FIG. 10 shows a fifth embodiment of a light emission module.

FIG. 11 shows a sixth embodiment of a light emission module.

### DETAILED DESCRIPTION

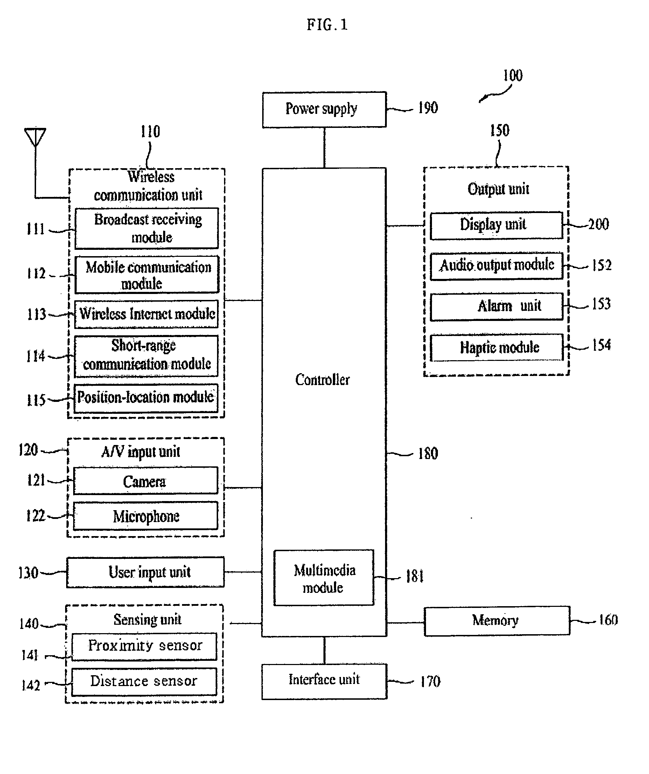

FIG. 1 shows one embodiment of a terminal 100 which, for example, may be or include any one of a number of mobile terminals such as a cellular phone, a smart phone, a laptop computer, a digital broadcasting terminal, a PDA (Personal Digital Assistants), a PMP (Portable Multimedia Player), or a navigation terminal just to name a few. Alternatively, the terminal may be any one of a number of stationary terminals such as digital TV and desk top computer.

As shown in FIG. 1, terminal 100 may be a mobile terminal which includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

The wireless communication unit 110 may include one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, and a position-location module 115.

The broadcast receiving module 111 receives a broadcast signal and/or broadcast associated information from an external broadcast managing server via a broadcast channel. The broadcast channel may include a satellite channel and a terrestrial channel.

The broadcast managing server may be a server which generates and transmits a broadcast signal and/or broadcast associated information or a server which is provided with a previously generated broadcast signal and/or broadcast associated information and then transmits the provided signal or information to a terminal.

The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By non-limiting example, such broadcasting systems include digital multimedia broadcasting-terrestrial (DMB-T), digital multimedia broadcasting-satellite (DMB-S), digital video broadcast-handheld (DVB-H), DVB-CBMS, OMA-BCAST, the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN (Wireless LAN) (Wi-Fi), Wibro (Wireless broadband), Wimax (World Interoperability for Microwave Access), HSDPA (High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Meanwhile, the A/V (audio/video) input unit 120 is configured to input an audio signal or a video signal and can include a camera module 121, a microphone module 122 and the like. The camera module 121 processes an image frame of a still or moving picture obtained by an image sensor in a video call mode or a photographing mode. And, the processed image frame can be displayed on the display 200.

The image frame processed by the camera module 121 is stored in the memory 160 or can be externally transmitted via the wireless communication unit 110. At least two camera modules 121 can be provided according to a configuration type of the terminal.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices (include a keypad, a dome switch, a touchpad such as static pressure/capacitance, a jog wheel and a jog switch. A specific example is one in which the user input unit 130 is configured as a touchpad in cooperation with a display, which will be described in more detail below.

The sensing unit 140 detects such a current configuration of the mobile terminal 100 as an open/closed configuration of the mobile terminal 100, a location of the mobile terminal 100, a presence or non-presence of user contact, and the like and then generates a sensing signal for controlling an operation of the mobile terminal 100.

For instance, if the mobile terminal 100 is a slide phone type, the sensing unit 140 is able to sense whether a slide phone is open or closed. And, the sensing unit 140 is responsible for sensing functions related to a presence or non-presence of power supply of the power supply 190, and an external device loading of the interface unit 170.

The sensing unit 140 may include a proximity sensor 141.

The output unit 150 is configured to output an audio signal, a video signal and/or an alarm signal. And, the output unit 150 may include the display 200, an audio output module 152, an alarm output module 153, and a haptic module 154.

The display 200 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call.

The display 200 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the displays can have a transparent or light-transmitting configuration to be externally viewable therethrough. And, such a display can be called a light-transmitting display. TOLED (transparent OLED), AMOLED (Active Matrix Organic Light Emitting Diode) and the like are representative examples of the light-transmitting displays. And, a rear structure of the display can have the light-transmitting configuration as well. Above structure enables the user to see things positioned in rear of a terminal body through a region of the display unit 200 of the terminal body occupies. An AMOLED (Active Matrix Organic Light Emitting Diode) may have a color gamut that is based on a ratio of accuracy of color reproduction to a recorded picture according to NTSC broadcasting standards.

According to an implementation type of the mobile terminal 100, at least two displays 200 can exist in the mobile terminal 100. For instance, a plurality of displays can be arranged on one face of the mobile terminal 100 in a manner of being spaced apart from each other or being built in one body. For another instance, a plurality of displays can be arranged on different faces of the mobile terminal 100, respectively.

In case that the display 200 and a sensor for detecting a touch action (hereinafter called 'touch sensor') of such a pointer as a user's finger, a pen and the like configures a mutual layer structure (hereinafter called 'touchscreen'), it is able to use the display 200 as an input device as well as an output device. In this case, the touch sensor can be configured with a touch film, a touch sheet, a touchpad or the like for example.

The touch sensor can be configured to convert a pressure applied to a specific portion of the display 200 or a variation of capacitance generated from a specific portion of display 200 to an electric input signal. Also, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know which portion of the display 200 is touched.

A proximity sensor 141 can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

In the following description, for clarity, an action that a pointer approaches without contacting with the touchscreen to be recognized as located on the touchscreen is named 'proximity touch'. And, an action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 200 or the audio output unit 152. Hence, the display 200 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The memory 160 can store programs for the processing and control of the controller 180 and is also able to perform a function for temporary storage of inputted/outputted data (e.g., phonebook data, message data, still picture data, moving picture data, etc.). Moreover, the memory 160 can store data of various patterns of vibration and sound outputted in case of the touch input to the touchscreen.

The memory 160 may include at least one storage medium of such a type as a flash memory type, a hard disk type, a multimedia card micro type, a card type memory (e.g., SD memory, XD memory, etc.), RAM, SRAM(Static Random Access Memory), ROM, EEPROM(Electrically Erasable Programmable Read-Only Memory), PROM(Programmable Read-Only Memory) and the like. Moreover, the mobile terminal 100 is able to operate a web storage that performs a storage function of the memory 160 on internet.

The interface unit 170 plays a role as an interface with every external device connected to the mobile terminal 100. For instance, the external devices include a wire/wireless headset, an external electricity charger, a wire/wireless data port, a card socket (e.g., memory card socket, SIM/UIM card socket, etc.), audio I/O (input/output) terminals, video I/O (input/output) terminals, earphones, etc. The interface unit 170 receives data from the external device or is supplied with power. The interface unit 170 then delivers the received data or the supplied power to the corresponding component within the mobile terminal 100 or transmits data within the portable terminal 100 to the corresponding external device.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 normally controls overall operations of the mobile terminal 100. For instance, the controller 180 performs the control and processing related to speech call, data communication, video call and the like. And, the controller 180 can be provided with a multimedia play module 181 for multimedia playback as well. The multimedia playback module 180 can be configured as hardware within the controller 180 or software separate from the controller 180.

The controller 180 is able to perform a pattern recognizing processing for recognizing a handwriting input or a drawing input performed on the touchscreen into a character and an image, respectively.

The power supply 190 receives an external and/or internal power source and then supplies power required for operations of the respective components, under the control of the controller 180.

Various embodiments described herein may be implemented in a computer-readable medium using, for example, computer software, hardware, or some combination thereof.

For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in the memory 160, and executed by the controller 180.

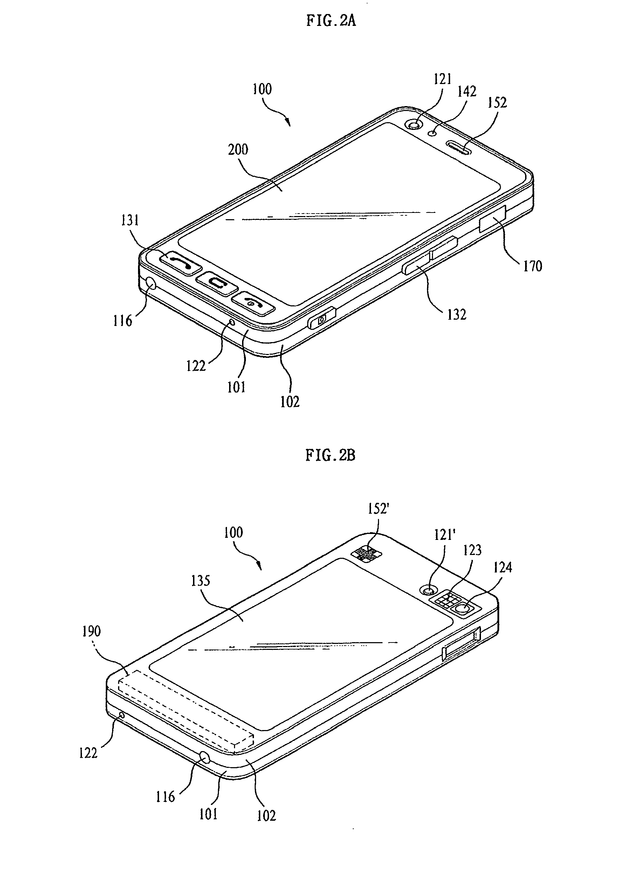

FIG. 2A shows one possible front view of mobile terminal 100. While the terminal is shown to have a bar-type body, other body types may be used in other embodiments such as but not limited to a slide type, a folder type, a swing type, a swivel type and so on, in which two or more than two bodies are coupled to allow relative motions.

The body includes a case (casing, housing, cover, and so on) which forms an exterior thereof. In the embodiment, the case includes a front case 101 and a rear case 102. Various electronic components are mounted in a space formed between the front case 101 and the rear case 102. There can be at least one intermediate case between the front case 101 and the rear case 102, additionally.

The cases can be injection moldings of synthetic resin or formed of a metal, such as stainless steel or titanium Ti.

The terminal body, mostly the front case 101, can have a display unit 200, a sound output unit 152, a camera 121, user input units 130/131 and 132, a microphone 122, an interface 170 arranged thereon.

The display unit 200 occupies most of a main surface of the front case 101. The sound output unit 152 and the camera 121 are arranged at a region adjacent to one end of the display unit 200 and the user input unit 132 and the microphone 122 are arranged at a region adjacent to the other end of the display unit 200. The user input unit 132 and the interface 170 can be arranged at sides of the front case 101 and the rear case 102.

The user input unit 130, to be handled for receiving an order to control operation of the mobile terminal 100, can include a plurality of handling units 131 and 132. The handling units 131 and 132, called as a handling portion collectively, can be of any type as far as it can be handled in a tactile manner. Contents to be received by the first and second handling units 131 and 132 can be set in a variety of ways. For an example, the first handling unit 131 can receive orders, such as start, end and scroll, and the second handling unit 132 can receive orders such as control of sound volume from the sound output unit 152, and shifting to a touch sensing mode of the display unit 200.

FIG. 2B shows one possible backside view of the mobile terminal in FIG. 2A. Referring to FIG. 2B, a camera 121' can be mounted to a backside of the terminal body, i.e., on the rear case 102, additionally. The camera 121' has a picture taking direction opposite to the camera 121 (See FIG. 2) actually, and can be a camera having pixels different from the camera 121.

For an example, it is preferable that the camera 121 has low density of pixels such that taking and transmitting a picture of a face of the user to an opposite side can be done properly, and the camera 121' has high density of pixels since there are many cases when the camera 121' takes a general object and stores the picture without transmission directly. The cameras 121 and 121' can be mounted to the terminal body, rotatably or able to pop-up.

A flash 123 and a mirror 124 are arranged adjacent to the camera 121', additionally. The flash 123 illuminates the object when the camera 121' takes the object. The mirror 124 enables the user to see the user's face or so on when the user takes a picture of the user with the user's camera 121'.

A sound output unit 152' can be mounted to the backside of the terminal body, additionally. The sound output unit 152' can implement a stereo function together with the sound output unit 152 (See FIG. 2A), and can be used for implementing a speaker phone mode.

Besides an antenna for communication, the terminal body at a side thereof can have a broadcasting signal reception antenna 124, additionally. The antenna 124 in the broadcast receiving module 111 (See FIG. 1) can be mounted to be able to pull out of the terminal body.

The terminal body has a power supply unit 190 mounted thereto for supplying power to the mobile terminal 100. The power supply unit 190 can be built-in the terminal body or detachably mounted to an outside of the terminal body.

The rear case 102 can have a touch pad 135 mounted thereto additionally for sensing a touch thereto. Alike the display unit 200, the touch pad 135 can also be a light transmission type. In this case, if the display unit 200 is configured to provide visual information to both sides of the display unit 200, the visual information can be sensed through the touch pad 135. All information to be provided to the both sides can be controlled by the touch pad 135. Different from this, a display unit can be mounted to the touch pad 13 additionally, to arrange a touch screen on the rear case 102, too.

The touch pad 135 is operative in relation to the display unit 200 on the front case 101. The touch pad 135 can be arranged in rear of the display unit 200 in parallel thereto. The touch pad 135 can have a size the same or smaller than the display unit 200.

For conveniences' sake, it is assumed that the mobile terminal 100 described below includes at least one of elements shown in FIG. 1. Particularly, the mobile terminal may include a display unit 200, a controller 180 for controlling the display unit 200, and a power supply unit 190 for supplying power to the mobile terminal.

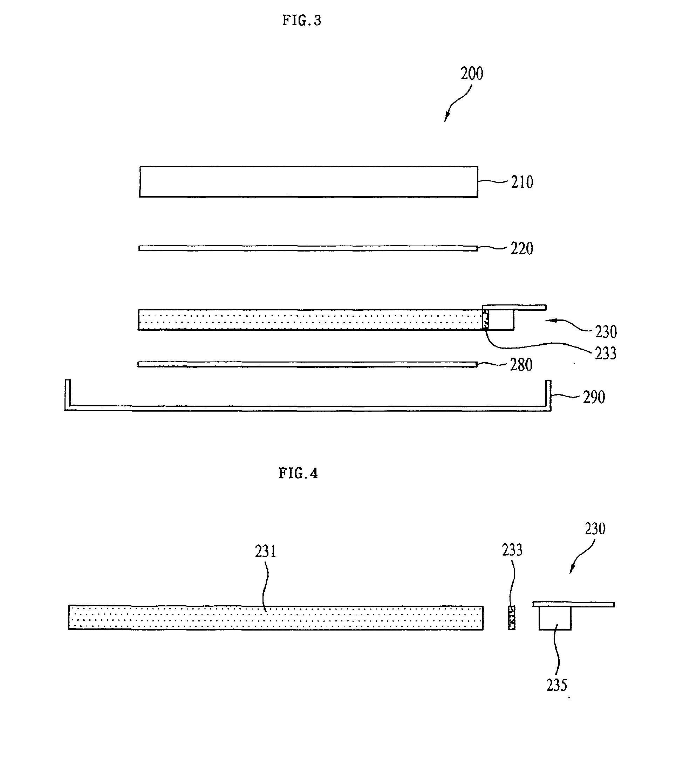

FIG. 3 shows a side view of display unit 200 of the mobile terminal. As shown, the display unit 200 may include a liquid crystal panel 210, a diffuser sheet 220 arranged under the liquid crystal panel 210, a back light unit (BLU) 230 arranged under the diffuser sheet 220 for providing a light to the liquid crystal panel 210, a reflector sheet 280 arranged under the back light unit 230 for reflecting the light from the back light unit 230, a frame 290 arranged under the reflector sheet 280 for supporting above elements.

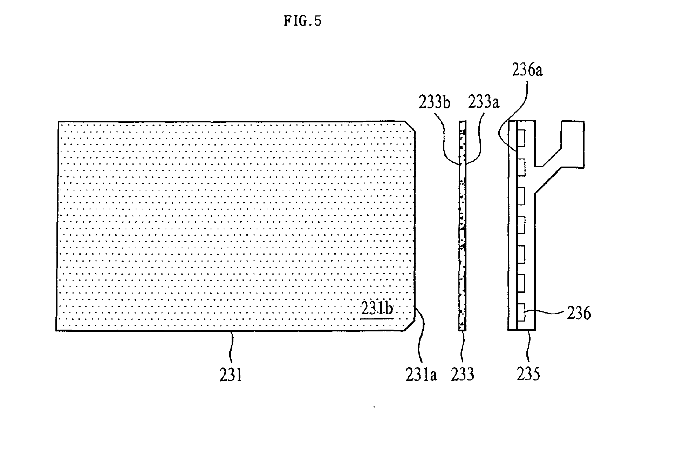

FIGS. 4 and 5 show one embodiment of back light unit 230 of liquid crystal panel 210 (i.e., LCD). Generally speaking, there are at least two types of back lighting units, one known as a direct-lighting type in which a light source is arranged on a rear surface of the liquid crystal panel 210 and another one known as an edge-lighting type in which the light source is arranged on or adjacent an edge of the liquid crystal panel 210. The back light unit 230 of the present embodiment is shown to be an edge-lighting type back light unit which is used in the mobile terminal for reducing a thickness of the display unit 200. However, a direct-lighting type unit may be used in other embodiments.

Referring to FIGS. 4 and 5, back light unit 230 includes a light guide plate LGP 231 arranged under the liquid crystal panel 210, a quantum dot filtering unit 233 arranged at a side of the light guide plate 231, and a light source supporter 235 at a side of the quantum dot filtering unit 233 for supporting a plurality of light source units 236. Preferably, the light guide plate 231, the quantum dot filtering unit 233 and the light source supporter 235 are bonded with light-transmissive resin to one another.

Referring to FIG. 5, the light guide plate 231 includes a light incident surface 231a for receiving the light from the light source unit 236, and a light emission surface 231 b for emitting the light to the liquid crystal panel 210, and the light incident surface 23 1 a and the light emission surface 231 b are angled or perpendicular to each other. In order to maintain uniformity of a screen of the liquid crystal panel 210, the light guide plate 231 may have a concentration of a light scattering agent which becomes heavier as the light guide plate 231 goes from one side thereof close to the light source unit 236 (i.e., a light incident surface side) to the other side thereof spaced from the light guide plate 231 the more for making the light to diffuse at the screen of the liquid crystal panel 210 uniformly to produce a bright and clear image.

Referring to FIG. 5, the quantum dot filtering unit 233, which may be a filtering unit having quantum dots having light emission materials filled therein, has a light incident surface 233a for receiving the light from the light source unit 236, and a light emission surface 233b for emitting the light to the light incident surface 231a of the light guide plate 231. The quantum dot in the quantum dot filtering unit 233, which, for example, may be a nano-sized semiconductor material having a quantum confinement effect, has a characteristic of generating a stronger light within a certain (e.g., narrow wavelength) band than other light emission materials (Refer to a graph shown below for an example).

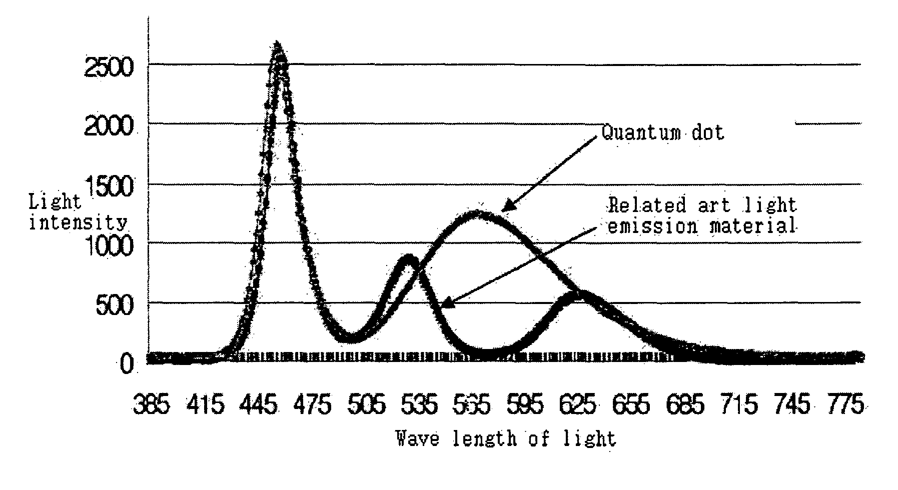

Light emission from the quantum dot, which takes place as an excited electron transits from a conduction band to a valence band, has a characteristic in which the wavelength varies with a size of particle even in a case of the same material. More specifically, because the quantum dot emits a light having a wavelength which is the shorter (a blue color group) as a size of the quantum dot becomes the smaller, a light of a desired wavelength band can be obtained by controlling the size of the quantum dot.

Since the quantum dot emits the light even if an excitation wavelength is selected in random, if many kinds of the quantum dots are excited with one wavelength, many colors of light can be observed at a time.

Moreover, since the quantum dot transits from a ground vibration state of the conduction band to a ground vibration state of the valence band only, almost of the light emitted from the quantum dot is a single color light. Because of these characteristics of the quantum dot, colors on the display can be made clear, and brightness can also be increased significantly compared to the AMOLED.

Eventually, by using the quantum dot filtering unit 233 having the quantum dots filled therein, at least one embodiment can achieved an improved color gamut (e.g., in some cases more than 100%) like AMOLED displays but with significantly lower production costs compared with AMOLED displays. Moreover, one or more embodiment herein may achieve improved brightness compared to AMOLED displays because of the characteristics of the quantum dot that emits a strong light within a narrow wave length band. A structure and a shape of the quantum dot filtering unit 233 will be described in more detail.

The light source supporter 235 has one side connected to a side of the quantum dot filtering unit 233 (i.e., a side positioned on a light incident surface 233a side of the quantum dot filtering unit 233), and the other side connected to the power supply unit 190. As shown in FIG. 4, the light source supporter 235 contains a plurality of the light source units 236 spaced from one another, and each of the light source units 236 has a light emission surface 236a for emitting a light therefrom. Preferably, the light source unit 236 is an LED device, and more preferably, the light source unit 236 is a blue LED or an UV LED.

The back light unit 230 has the following light emission process. A light is generated at the light source unit 236 which is an LED device, emits from the light incident surface 236a, is incident on the light incident surface 233a of the quantum dot filtering unit 233, is converted into a R light, a G light, and a B light which are strong lights with narrow wave length bands by the quantum dots as the light passes the quantum dot filtering unit 233, emits from the light emission surface 233b of the quantum dot filtering unit 233, and provided to the light incident surface 231a of the light guide plate 231. Hereinafter, the light source unit 236 and the quantum dot filtering unit 233 are called as a light emission module, collectively.

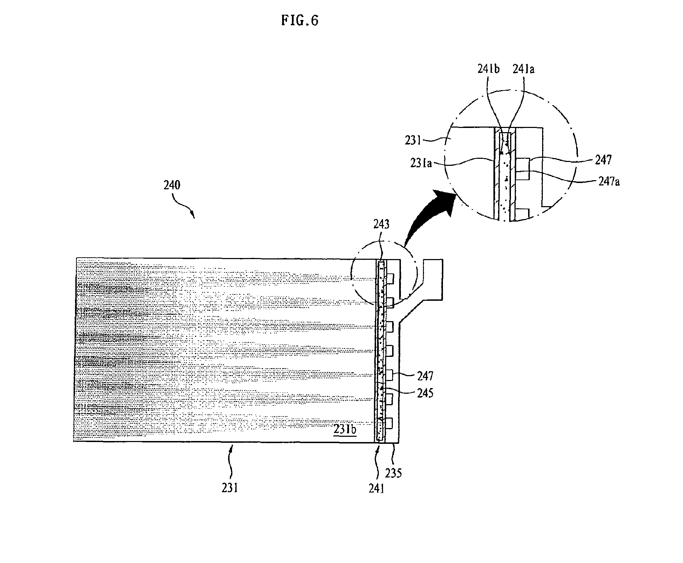

The light emission modules in accordance with first to sixth embodiments will be described with reference to FIGS. 6 to 11, respectively.

FIG. 6 shows a first embodiment of a light emission module 240 whicih includes a quantum dot filtering unit 241 and a light source unit 247. In the light emission module 240, light from the light source unit 236 travels in an order of the light emission surface 247a of the light source unit 247, the light incident surface 241 a and the light emission surface 241b of the quantum dot filtering unit 241, and the light incident surface 231a and the light emission surface 231b of the light guide plate 231.

The quantum dot filtering unit 240 in accordance with the first embodiment includes one hollow light-transmissive pipe member 243 and the quantum dots 243 filled in the hollow pipe member 243. Thus, by arranging the quantum dot filtering unit 241 at a side of the light source unit 247, only the quantum dot filtering unit 241 is added to the present edge-lighting type back light unit, enabling to provide a low cost back light unit which can improve the color gamut more than 100% like but not limited to AMOLED displays and also increase brightness owing to the characteristic of the quantum dot of emitting a strong light of a narrow wavelength band even if a structure and a configuration of the back light unit are not generally changed like the AMOLED.

However, since the quantum dot filtering unit 241 in accordance with the first embodiment is configured to have one hollow pipe member 245 to form a region of the light incident surface of the quantum dot filtering unit 241 on which the light from the light source unit 247 is incident at a great incident angle (an incident angle greater than a critical angle at which total reflection can take place), and to have a long extension of the hollow pipe member 243 to cause excessive scattering, or excessive reflection of the R light and the G light within the quantum dot filtering unit 241, the quantum dot filtering unit 241 is liable to cause a color deviation between a region (a region on a right side of the light guide plate 231 in FIG. 6) of the screen of the display unit 200 adjacent to the light emission module 240, and a region (a region on a left side of the light guide plate 231 in FIG. 6) of the screen of the display unit 200 spaced from the light emission module.

Therefore, even if the light emission module 240 in accordance with the first embodiment can improve color gamut compared to other types of back light units of LED devices significantly, the light emission module might in some cases reduce the improvement of the color gamut of the display unit 200 more or less on the whole due to the structure and shape of the light emission module 240. Light emission modules in accordance with second to sixth embodiments may prevent right and left direction color deviation of the display unit 200 from taking place.

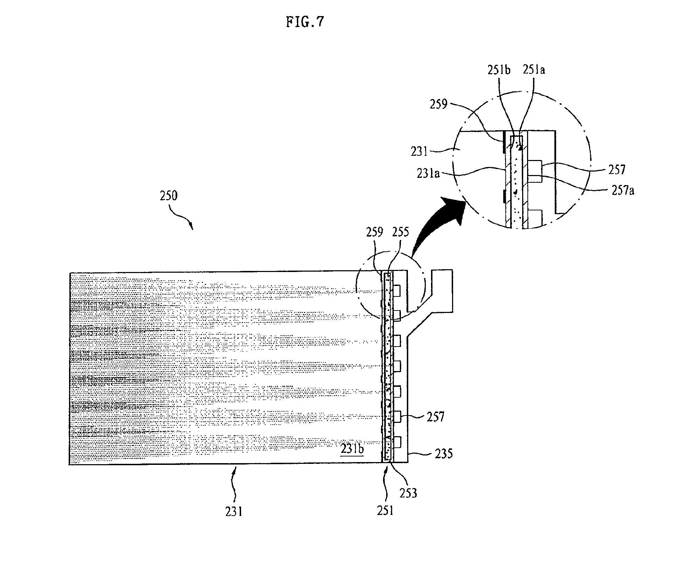

FIG. 7 shows a second embodiment of a light emission module 250 which includes a quantum dot filtering unit 251 having a light-transmissive hollow pipe member 253 and quantum dots 255 filled in the hollow pipe member, a plurality of non-light-transmissive films 259 arranged on a side of a light emission surface 251b of the quantum dot filtering unit 251, and a plurality of light source units 257. In the light emission module 250 in accordance with the second embodiment, a light generated at the light source unit 257 travels in an order of the light emission surface 257a of the light source unit 257, a light incident surface 251a and a light emission surface 251b of the quantum dot filtering unit 251, and a light incident surface 231a and a light emission surface 231b of a light guide plate 231.

Referring to FIG. 7, different from the quantum dot filtering unit 241 in accordance with the first embodiment, the quantum dot filtering unit 251 in accordance with the second embodiment has the plurality of non-light-transmissive films 259 arranged in front of the quantum dot filtering unit 251 spaced from one another.

Preferably, the plurality of non-light-transmissive films 259 are arranged at positions on a side of the light emission surface 251b of the quantum dot filtering unit 251 matched to a space between each of adjacent light source units 257, and a space between each of the adjacent non-light-transmissive films 259 is the same with, or greater than, a width of the light source unit 257. Moreover, the space between each of the adjacent non-light-transmissive films 259 is determined within a range in which the light from the light source unit 257 is not scattered as well as not reflected within the hollow pipe member 253.

That is, by forming the space between each of the adjacent non-light-transmissive films 259 on the side of the light emission surface 251b of the quantum dot filtering unit 251 to be the same or greater than a width of the light source unit 257, the quantum dot filtering unit 251 in accordance with the second embodiment can block a light reflection path and a light scattering path of the light reflected at a side of the quantum dot filtering unit 251 (the light emission surface 251b of the quantum dot filtering unit) opposite to the light source unit 257.

Owing to this, excessive scattering and reflection of the R light and the G light can be prevented. Eventually, since the quantum dot filtering unit 251 in accordance with the second embodiment can prevent the left/right direction color deviation of the display unit 200, the light emission module 250 in accordance with the second embodiment can improve the color gamut significantly like, for example, but not limited to AMOLED displays without reduction of the color gamut.

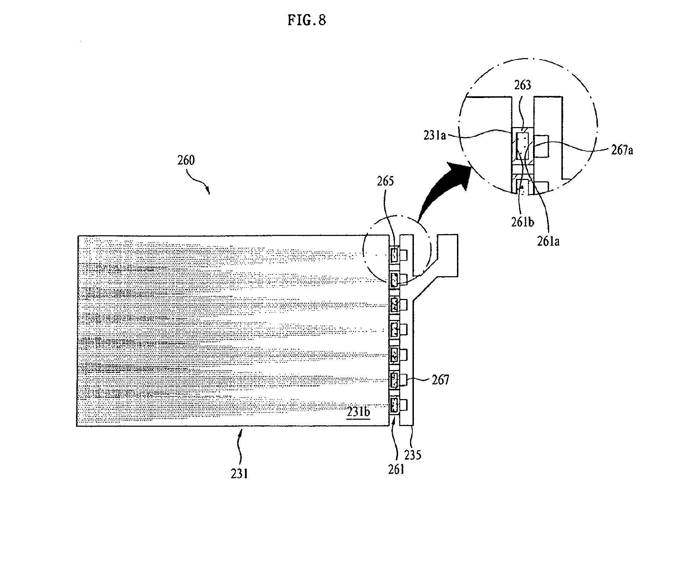

FIG. 8 shows a third embodiment of a light emission module 260 which includes a quantum dot filtering unit 261 and a light source unit 267. In the light emission module 260 in accordance with the third embodiment, light from the light source unit 267 travels in an order of a light emission surface 267a of the light source unit 267, a light incident surface 261a and a light emission surface 261b of the quantum dot filtering unit 261, and the light incident surface 231a and the light emission surface 231b of the light guide plate 231.

Referring to FIG. 8, different from the quantum dot filtering unit 241 in accordance with the first embodiment, the quantum dot filtering unit 261 in accordance with the third embodiment includes a plurality of light-transmissive hollow pipe members 263 spaced from one another, and quantum dots 265 filled in each of the pipe members 263.

Preferably, the plurality of hollow pipe members 263 are arranged at positions matched to positions of the plurality of light source units 267 respectively, and the hollow pipe member 263 has a width the same with, or greater than, a width of the light source unit 267. And, the width of the hollow pipe member 263 is determined to be within a range in which almost of the light from the light source unit 267 is neither totally reflected, nor scattered, nor reflected within the hollow pipe member 263.

That is, by dividing the hollow pipe member 263 of the quantum dot filtering unit 261 into a plurality of small sized pipe members, and forming the width of each of the small pipe members the same or greater than a width of each of the light source units 267 matched to the small sized pipe members, the quantum dot filtering unit in accordance with the third embodiment may be able to prevent a light incident angle of the light traveling toward the quantum dot filtering unit 261 from the light source unit 267 from becoming greater, and block a light reflection path and a light scattering path of the light reflected at a side of the quantum dot filtering unit 261 (i.e., the light emission surface 261b of the quantum dot filtering unit) matched to the light source unit.

Owing to this, the light incident angle onto the quantum dot filtering unit 261 from the light source unit 267 becomes below the critical angle, enabling to prevent the light from the light source unit 267 from totally reflecting and to prevent the R light and the G light from scattering and reflecting excessively. Eventually, since the quantum dot filtering unit 261 in accordance with the third embodiment may prevent the left/right direction color deviation of the display unit 200, the light emission module 260 in accordance with the third embodiment may improve the color gamut significantly like, for example, but not limited to AMOLED displays without reduction of the color gamut.

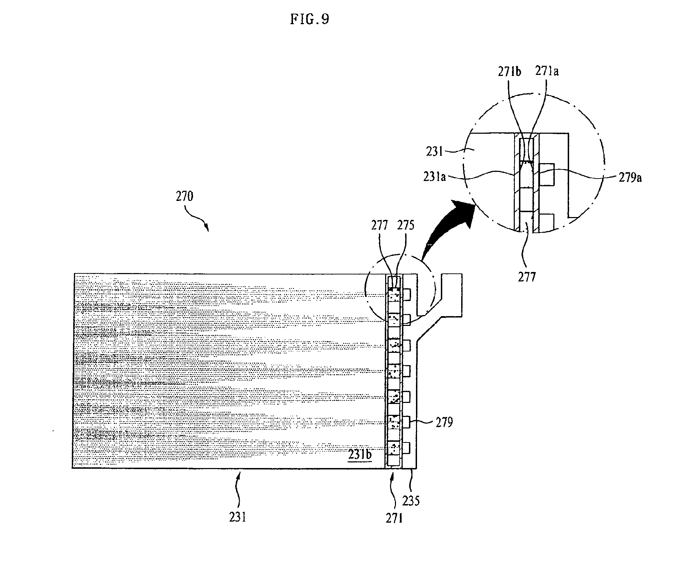

FIG. 9 shows a fourth embodiment of a light emission module 270 which includes a quantum dot filtering unit 271 and a light source unit 279. In the light emission module 270 in accordance with the fourth embodiment, light from the light source unit 279 travels in an order of a light emission surface 279a of the light source unit 279, a light incident surface 261a and a light emission surface 271b of the quantum dot filtering unit 271, and the light incident surface 231a and the light emission surface 231b of the light guide plate 231.

Referring to FIG. 9, different from the quantum dot filtering unit 241 in accordance with the first embodiment, the quantum dot filtering unit 271 in accordance with the fourth embodiment includes a light-transmissive hollow pipe members 273 having a plurality of filling sections 275 spaced from one another, and quantum dots 277 filled in each of the filling sections 275.

Preferably, referring to FIG. 9, the plurality of filling sections 275 are arranged at positions matched to positions of the plurality of light source units 279 respectively, and the filling section 275 has a width the same with, or greater than, a width of the light source unit 279. And, the width of the filling section 275 is determined to be within a range in which almost of the light from the light source unit 279 is neither totally reflected, nor scattered, nor reflected within the filling section 275.

That is, by forming the plurality of filling sections 275 in the hollow pipe member 273 of the quantum dot filtering unit 271, and the width of each of the filling sections 275 the same or greater than the width of the light source unit 279 matched to the filling section 275, the quantum dot filtering unit in accordance with the third embodiment may prevent a light incident angle of the light traveling toward the quantum dot filtering unit 271 from the light source unit 279 from becoming greater, and block a light reflection path and a light scattering path of the light reflected at a side of the quantum dot filtering unit 271 (i.e., the light emission surface 271b of the quantum dot filtering unit) matched to the light source unit 279.

Owing to this, the light incident angle onto the quantum dot filtering unit 271 from the light source unit 279 becomes below the critical angle, enabling to prevent the light from the light source unit 279 from totally reflecting and to prevent the R light and the G light from scattering and reflecting excessively. Eventually, since the quantum dot filtering unit 271 in accordance with the fourth embodiment may prevent the left/right direction color deviation of the display unit 200, the light emission module 270 in accordance with the fourth embodiment may improve the color gamut significantly like, for example, but not limited to AMOLED displays without reduction of the color gamut.

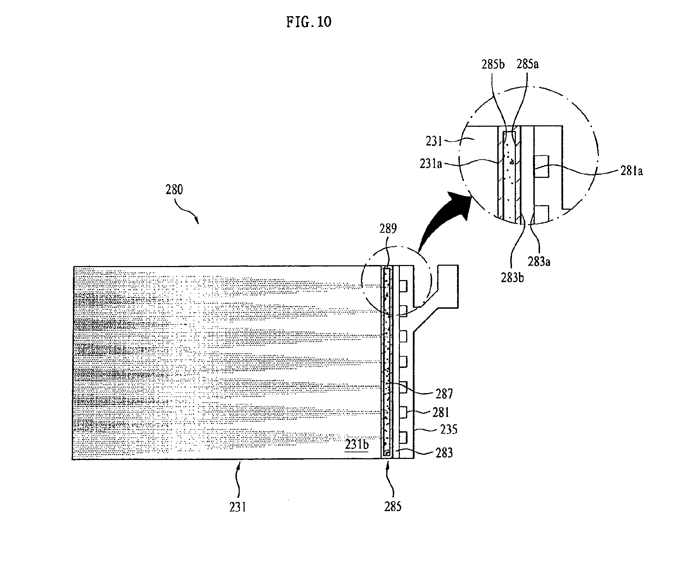

FIG. 10 shows a fifth embodiment of a light emission module 280 which includes a plurality of light source units 281, a first filter unit 283 arranged on a side (i.e., a light emission surface 281a of the light source unit 281) of the plurality of light source units 281, and a second filter unit 285 arranged on a side (i.e., a light emission surface 283b of the first filer unit) of the first filter unit 283. In the light emission module 280 in accordance with the fifth embodiment, light from the light source unit 281 travels in an order of a light emission surface 281a of the light source unit 281, a light incident surface 283a and a light emission surface 283b of the first filter unit 283, a light incident surface 285a and a light emission surface 285b of the second filter unit 285, and the light incident surface 231a and the light emission surface 231b of the light guide plate 231.

The first filter unit 283 is a filter for converting a light from the light source unit 281 (i.e., a dot light source) into a uniform face light source. Preferably, the first filter unit 283 is a thin film type light guide body. That is, similar to the light guide plate 231, the first filter unit 283 has concentration of a scattering agent which becomes the heavier as the first filter unit 283 goes from a side close to the light source unit 281 (i.e., a light incident surface 231a side of the light guide plate) toward the source unit 281 the more, for making the light to be incident on the light incident surface 285a of the second filter unit 285 uniformly.

The first filter unit 283 can be a diffuser sheet for making uniform diffusion of the light from the light source unit 281. In the embodiment, since the light from the light source unit is converted into a facial light by the first filter unit, not only the R light and the G light, but also the B light, can be scattered and reflected uniformly in the second filter unit. Accordingly, since excessive reflecting or scattering only of the R light and the G light can be prevented, the left/right direction color deviation of the display unit can be prevented.

The second filter unit 285 includes a light-transmissive hollow pipe member 289 and quantum dots 287 filled in the pipe member 289. As described before, the quantum dot 287 having the light received from the light source unit 281 emits the R light, the G light and the B light.

Since the light scattered or reflected at the first filter unit 283 uniformly is incident on the light incident surface 285a of the second filter unit 285 as a facial light, making the second filter unit 285 to scatter not only the R light and the G light, but also the B light which is scattered at the first filter unit 283, the light emission module 280 in accordance with the fifth embodiment may remove the left/right direction color deviation caused by excessive scattering of the R light and the G light like in the case of the light emission module 240 in accordance with the first embodiment.

Eventually, the light emission module 280 in accordance with the fifth embodiment may improve the color gamut up to 100% like, for example, but not limited to AMOLED displays without reduction of the color gamut at a low production cost.

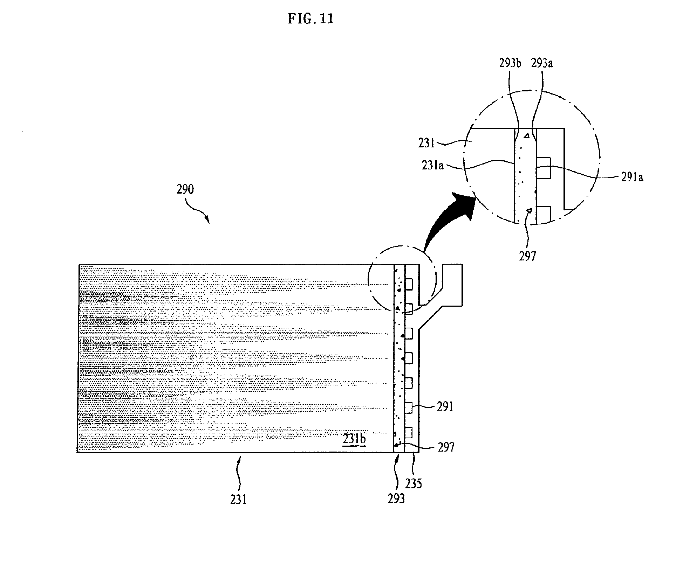

FIG. 11 shows a sixth embodiment of a light emission module 290 which includes a plurality of light source units 291, and a quantum dot filtering unit 290 arranged on a side (i.e., a light emission surface 291 a of the light source unit) of the plurality of light source units 291. In the light emission module 290 in accordance with the sixth embodiment, light from the light source unit 291 travels in an order of the light emission surface 291 a of the light source unit 291, a light incident surface 293a and a light emission surface 293b of the quantum dot filtering unit 293, and the light incident surface 231 a and the light emission surface 231b of the light guide plate 231.

Different from the quantum dot filtering unit 243 in accordance with the first embodiment, the quantum dot filtering unit 293 in accordance with the sixth embodiment may have a configuration and a structure similar to the light guide plate 231 to convert light from the light source unit into a facial light, since the quantum dot filtering unit 293 having the quantum dots 297 contained therein makes the light to scatter and reflect within the quantum dot filtering unit 293 converting the light into the facial light.

At the same time with this, the quantum dot filtering unit 293 may emit the light converted into the facial light in the R light, G light, and B light through the light emission surface 293b. That is, the quantum dot filtering unit 293 may be filter fabricated in configuration and structure in which, for example, powder form of the quantum dots are mixed with PMMA (or acryl) resin, or COP (cyclic olefin polymer), or PC (polycarbonate). These are generally used as a material of the light guide plate, at the time of molding with molten material for converting the light into the facial light.

In the quantum dot filtering unit 293 in accordance with the sixth embodiment, the light from the light source unit is scattered and reflected uniformly within the quantum dot filtering unit so as to be converted into the facial light, at the same time with this, converted into the R light, the G light and the B light within the quantum dot filtering unit by the quantum dots, and emits through the light emission surface 293b in uniform facial lights. Eventually, since the excessive reflection or scattering only of the R light and the G light can be prevented, the left/right direction color deviation of the display unit can be prevented.

Eventually, the light emission module 290 in accordance with the sixth embodiment may improve the color gamut up to 100% like, for example, but not limited to AMOLED displays without reduction of color gamut at low production cost.

As described, one or more embodiments herein may improve color gamut significantly by based, at least in part, on the structure and shape of the light emission module. This allows for use of a fabrication process and facilities that do not need to be modified. The embodiments here may also have manufacturing costs significantly less than other types of displays devices, while at the same time achieving improved color gamut which is comparable to, for example, AMOLED displays but at lower cost.., Also, the embodiments herein may solve the low-brightness problem which is a disadvantage of AMOLED displays using quantum dot light characteristics.

Moreover, the structure and shape of the light emission module of one or more of the present embodiments may prevent R light and G light of the light source unit from scattering, reflecting, and totally reflecting excessively. This may be achieved, for example, by removing left/right direction color deviation, thereby preventing a reduction in color gamut from occurring.

An object of one or more of the embodiments presented herein, therefore, is to provide a mobile terminal with improved display quality in terms of color gamut and which can be produced at low cost. Another object is to provide a mobile terminal which can remove color deviation.

In accordance with one embodiment, a mobile terminal includes a liquid crystal panel, a plurality of LED devices spaced from one another, a light guide plate provided under the liquid crystal panel to receive a light from the LED devices at a side thereof, and a quantum dot filtering unit arranged between the LED devices and the side of the light guide plate.

The mobile terminal may also include a light source unit including at least one or more than one light sources, a light-transmissive hollow pipe member having a light emission material filled therein for converting a light from the light source into a R light, a G light, and a B light depending on sizes of particles thereof, a light guide plate arranged on a side of the hollow pipe member for guiding or reflecting the light incident thereon after passing through the hollow pipe member, and a display panel arranged on the light guide plate.

In another aspect, the mobile terminal includes a plurality of LED devices spaced from one another, a first filter unit for diffusing the light provided from the LED devices, a second filter unit for passing the light provided from the first filter unit, the second filter unit containing quantum dots therein, a light guide plate having the light passed through the second filter unit incident on a side thereof, a liquid crystal panel arranged on the light guide plate, and a controller for controlling the LED devices.

Thus, the mobile terminal can improve the color gamut of a display unit at a low production cost compared to the AMOLED while maintaining a configuration of a related art LCD display unit, and can remove a color deviation of the display unit to prevent the color gamut from reducing.

In accordance with another embodiment, a mobile terminal comprises a display panel; a plurality of light sources spaced from one another; a light guide to receive light from the light sources; and a quantum dot filter between the light sources and the light guide. The quantum dot filter may include a light-transmissive pipe including quantum dots.

Additionally, a plurality of non-light-transmissive films may be included, wherein the non-light-transmissive films are spaced from one another and located adjacent a light emission surface side of the pipe. Spaces between adjacent ones of the plurality of non-light-transmissive films may be arranged at positions that substantially correspond to positions of the light sources. Also, spaces between adjacent ones of the plurality of non-light-transmissive films may have widths that are substantially equal to or greater than widths of the light sources.

In accordance with another embodiment, the quantum dot filter may include a plurality of light-transmissive pipe sections spaced from one another, wherein each section includes quantum dots. The plurality of light-transmissive pipe sections may be arranged at positions which substantially correspond to positions of the light sources. Also, the plurality of light-transmissive pipe sections have widths that are substantially equal to or greater than widths of the light sources.

In accordance with another embodiment, the quantum dot filter may include a light-transmissive pipe including a plurality of filling sections spaced from one another, each of the filling sections including quantum dots. The filling sections may be located at positions that substantially correspond to positions of respective ones of the light sources. Also, the filling sections may have widths that are substantially equal to or greater than widths of the light sources.

In accordance with another embodiment, a mobile terminal comprises a light source; a light pipe to convert light from the light source into different color light; a light guide to receive light from the pipe; and a display panel to receive light from the light guide, wherein the pipe includes quantum dots and wherein light from the light source is converted into different color light based on sizes of particles corresopnding to the quantum dots. The sizes of the quantum dots may be directly proportional to wavelengths of the converted light.

The pipe may include a plurality of pipe sections. Also, the pipe may have a width which prevents light from experiencing total reflection and scattering, and which prevents reflection of light from occurring within the pipe. Also, one or more of the light sources may be BLUE LEDs or UV LEDs.

In accordance with another embodiment, a mobile terminal comprises a plurality of light sources spaced from one another; a first filter to diffuse light from the light sources; a second filter including quantum dots to pass light from the first filter; a light guide to receive light from the second filter; a panel adjacent the light guide; and a controller to control the light sources.

The first filter may convert light from the light sources into substantially uniform facial light, and/or the first filter may include a thin film type light guide body or a diffusing sheet. The second filter may include a light-transmissive pipe including quantum dots.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. The features of any one embodiment may be combined with one or more features of the remaining embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal comprising:
a display panel;
a plurality of light sources spaced from one another;
a light guide to receive light from the light sources; and
a quantum dot filter between the light sources and the light guide.

2. The mobile terminal of claim 1, wherein the quantum dot filter includes:
a light-transmissive pipe including quantum dots.

3. The mobile terminal of claim 2, further comprising:
a plurality of non-light-transmissive films,
wherein the non-light-transmissive films are spaced from one another and located adjacent a light emission surface side of the pipe.

4. The mobile terminal of claim 3, wherein spaces between adjacent ones of the plurality of non-light-transmissive films are arranged at positions that substantially correspond to positions of the light sources.

5. The mobile terminal of claim 3, wherein spaces between adjacent ones of the plurality of non-light-transmissive films have widths that are substantially equal to or greater than widths of the light sources.

6. The mobile terminal of claim 1, wherein the quantum dot filter includes:
a plurality of light-transmissive pipe sections spaced from one another, wherein each section includes quantum dots.

7. The mobile terminal of claim 6, wherein the plurality of light-transmissive pipe sections are arranged at positions which substantially correspond to positions of the light sources.

8. The mobile terminal of claim 6, wherein the plurality of light-transmissive pipe sections have widths that are substantially equal to or greater than widths of the light sources.

9. The mobile terminal of claim 1, wherein the quantum dot filter includes:
a light-transmissive pipe including a plurality of filling sections spaced from one another, each of the filling sections including quantum dots.

10. The mobile terminal of claim 9, wherein the filling sections are located at positions that substantially correspond to positions of respective ones of the light sources.

11. The mobile terminal of claim 9, wherein the filling sections have widths that are substantially equal to or greater than widths of the light sources.

12. The mobile terminal of claim 1, further comprising a first filter to diffuse light from the light sources,
wherein the first filter is arranged between the light sources and the quantum dot filter.

13. The mobile terminal of claim 12, wherein the first filter converts light from the light sources into substantially uniform facial light.

14. The mobile terminal of claim 13, wherein the first filter includes a thin film type light guide body or a diffusing sheet.

15. The mobile terminal of claim 1, wherein the quantum dot filter has a configuration and a structure converting light from the light sources into a facial light, and has the quantum dots contained therein.
